# EUROPÄISCHE PATENTSCHRIFT

(11) **EP 0 753 544 B1**
(45) Veröffentlichungstag und Bekanntmachung des Hinweises auf die Patenterteilung: **31.10.2001**
(21) Anmeldenummer: 96110136.7
(22) Anmeldetag: 24.06.1996
(51) Int. Cl.: C09B 67/04, C09B 67/20

(54) **Verfahren zur Herstellung von flüssigen Pigmentpräparationen**
Process to manufacture liquid pigment preparations
Procédé de fabrication de préparations pigmentaires liquides

(30) Priorität: 06.07.1995 DE 19524624; 06.05.1996 DE 19618056
(43) Veröffentlichungstag der Anmeldung: 15.01.1997
(73) Patentinhaber: Clariant GmbH, 65929 Frankfurt am Main (DE)
(72) Erfinder: Schnaitmann, Dieter, Dr., 65817 Eppstein (DE); Böhmer, Martin, 61267 Neu-Anspach (DE); Urban, Manfred, 65205 Wiesbaden (DE)

(56) Entgegenhaltungen:
- EP-A- 0 069 394
- EP-A- 0 408 499
- EP-A- 0 574 790
- EP-A- 0 666 288
- EP-A- 0 678 559
- EP-A- 0 702 060
- DE-A- 3 016 052
- FR-A- 1 249 665
- FR-A- 1 434 259
- FR-A- 2 107 305
- US-A- 4 522 654

## Beschreibung

Die vorliegende Erfindung betrifft ein besonders umweltfreundliches und wirtschaftliches Verfahren zur Herstellung von flüssigen Pigmentpräparationen.

Pigmentpräparationen sind Dispersionen von Pigmenten in Trägermaterialien. Außer dem Pigment und dem Trägermaterial können noch Zusatzstoffe enthalten sein. Die Pigmente sind im Trägermaterial dispergiert und von diesem vollständig umhüllt. Die Trägermaterialien sind mit den vorgesehenen Anwendungsmedien identisch, ähnlich oder zumindest gut verträglich. Die Pigmente sind in den Pigmentpräparationen in höherer Konzentration enthalten als im späteren Anwendungsmedium.

Pigmentpräparationen dienen als Farbmittel zum Pigmentieren von hochmolekularen Materialien, wie Lacke, Druckfarben, Kunststoffe und Druckfarben für den Textildruck. Beim Einarbeiten von Pigmenten in Lacke, Druckfarben, Kunststoffe und Druckfarben für den Textildruck treten häufig Schwierigkeiten auf, da sich zahlreiche Pigmente im Anwendungsmedium nur unter hohem Aufwand in einen dispergierten Zustand mit befriedigenden anwendungstechnischen Eigenschaften bringen lassen. Wenn die Pigmentteilchen zu grobteilig sind und daher die optimale Farbstärke nicht erreicht wird, lassen sich keine brauchbaren Pigmentpräparationen herstellen. Während und nach einem Dispergiervorgang können Flockungserscheinungen auftreten, die zu Viskositätsänderungen des Anwendungsmediums, zu Farbtonänderungen und Verlusten an Farbstärke, Deckvermögen, Glanz, Homogenität und Brillanz bei den gefärbten Materialien führen. Diese Schwierigkeiten können durch den Einsatz geeigneter Pigmentpräparationen vermieden werden. Pigmentpräparationen lassen sich normalerweise mit geringem Dispergieraufwand und ohne ökologische Probleme in die Trägermaterialien einarbeiten und zeichnen sich in vielen Anwendungsmedien durch ihre hervorragenden coloristischen und rheologischen Eigenschaften sowie durch günstiges Flockungs- und Absetzverhalten aus.

Für die Herstellung von Pigmentpräparationen werden normalerweise die feinteiligen Pigmente eingesetzt. Die Einarbeitung in die Trägermaterialien erfolgt hierbei durch Dispergierung in Rollmühlen, Schwingmühlen, Rührwerkskugelmühlen, Mischern, Walzenstühlen oder Knetern. Der verwendete Dispergierapparat ist abhängig von der Dispergierbarkeit des eingesetzten Pigments, dem Trägermaterial und dem Zusatzstoff. In einigen Fällen werden auch die grobkristallinen Rohpigmente eingesetzt. Dabei werden Feinverteilung und Dispergierung in einfacher Weise miteinander kombiniert und es entfällt die aufwendige Feinverteilung der grobkristallinen Rohpigmente in flockungsinstabilen Medien und der Finish.

Die nicht vorveröffentlichte EP-A-0 666 288 beschreibt ein Verfahren zur Herstellung von Chinacridonpigmenten durch Mahlung der Rohpigmente in Rührwerkskugelmühlen mit einer Umfangsgeschwindigkeit über 12 m/s mit nichtmetallischen Mahlkörpern vom Durchmesser kleiner oder gleich 0,9 mm. Die Mahlung erfolgt in wässrigem Medium, das ggf. Ether oder Glykolether enthalten kann.
Die nicht vorveröffentlichte EP-A-0 678 559 offenbart ein Verfahren zur Herstellung von Pigmentpräparationen von polycyclischen organischen Pigmenten, insbesondere Dioxazinen, Perylenen oder Chinacridonen, welches durch eine Trockenmahlung der grobkristallinen Rohpigmente, gefolgt von einer Nassmahlung der erhaltenen Präpigmente und anschließendem Lösemittelfinish gekennzeichnet ist.
Die nicht vorveröffentlichte EP-A-0 702 060 beschreibt ein Verfahren zur Herstellung von 4,10-Dibromanthanthron-Pigmenten durch Mahlung der grobkristallinen Rohpigmente in Rührwerkskugelmühlen mit einer Umfangsgeschwindigkeit über 12 m/s mit nichtmetallischen Mahlkörpern vom Durchmesser kleiner als 1 mm. Die Mahlung wird in wässrigem Medium durchgeführt, das oberflächenaktive Mittel enthalten kann.
In der FR-A-1 249 665 wird ein Verfahren zur Mahlung von Farbmitteln und Pigmenten beschrieben, bei dem das flüssige Mahlmedium ein Polymer sein kann. Über das Mahlaggregat werden keine näheren Angaben gemacht. Die Pigmentteilchen fallen in einer Teilchengröße zwischen 0,1 und 1 µm an, was für heutige Anforderungen nicht ausreichend ist.

Die US-PS 5 318 627 (I) beschreibt ein Verfahren zur Herstellung von Dioxazinpigmentzubereitungen auf Basis von C.I. Violet 23 durch Perlmahlung von grobkristallinen Rohpigmenten und anschließendem Lösemittelfinish.
Die US-PS 5 296 033 (II) beschreibt ein Verfahren zur Herstellung von Phthalocyaninpigmentzubereitungen durch Perlmahlung von grobkristallinen Rohpigmenten und anschließendem Lösemittelfinish.
Die US-PS 5 296 034 (III) beschreibt ein Verfahren zur Herstellung von Phthalocyaninpigmentzubereitungen der α-Phase durch Perlmahlung von grobkristallinen Rohpigmenten und anschließendem Lösemittelfinish.
Nach den Verfahren I bis III werden Pigmentzubereitungen hergestellt, die im Gegensatz zu den Pigmentpräparationen keine Trägermaterialien enthalten. Sie können deshalb nur mit hohem Dispergieraufwand in Lacke, Druckfarben und Kunststoffe eingearbeitet werden. Die Perlmahlung erfolgt in flockungsinstabilen Medien, damit die Abtrennung der flüssigen Phase und die Aufarbeitung der Pigmentzubereitungssuspensionen ermöglicht wird. Wegen des ungünstigen Fließ- und Absetzverhaltens des Mahlguts können keine hohen Pigmentkonzentrationen eingesetzt werden. Daher liegt die Pigmentkonzentration bei der Perlmahlung in der Rührwerkskugelmühle unter 20%, und nur in einigen speziellen Fällen sind höhere Konzentrationen möglich. Bei hohen Pigmentkonzentrationen nimmt die Fließfähigkeit der Mahlgüter so weit ab, daß die Mahlwirkung deutlich eingeschränkt wird, so daß die erforderliche Feinteiligkeit nicht mehr erreicht wird. Daher liegt die Viskosität des Mahlguts bei der kontinuierlichen Mahlung im unteren Viskositätsbereich bei unter 0,1 Pas. An die Mahlung schließt sich ein Lösemittelfinish an.

Die DE-A-3 016 052 (IV) beschreibt die Herstellung von wäßrigen Phthalocyanin-Pigmentdispersionen durch Naßmahlung von grobkristallinen Phthalocyanin-Rohpigmenten in Anwesenheit von Tensiden und Wasser auf einer Rührwerkskugelmühle mit Scheibenrührwerk. Als Mahlkörper werden Stahlkugeln vom Durchmesser 0,25 mm verwendet. Die Mühle ist zu 85 Vol-% mit Mahlkörpern gefüllt. Über die Umfangsgeschwindigkeit des Rührwerks und über den Energieeintrag werden keine Angaben gemacht.

Die DE-A-3 446 177 (V) beschreibt die Herstellung von Phthalocyanin-Pigmentdispersionen durch Naßmahlung von grobkristallinen Phthalocyanin-Rohpigmenten in einem nichtwäßrigen, lösemittelhaltigen Bindemittelsystem auf einer Rollmühle oder Rührwerkskugelmühle mit Scheibenrührwerk. Bei der Mahlung auf der Rührwerkskugelmühle werden Stahlkugeln vom Durchmesser 0,25 bis 0,45 mm verwendet. Über die Umfangsgeschwindigkeit des Rührwerks und über den Energieeintrag werden keine Angaben gemacht.

Die Verfahren IV und V sind nicht universell anwendbar, da sie jeweils nur für eine Pigmentklasse und nur für ein begrenztes Anwendungsgebiet geeignet sind. Bei dieser Ausführungsform der Rührwerkskugelmühlen sind keine hohen Energieeinträge möglich. Die Mahlung wird mit den spezifisch schweren Stahlkugeln durchgeführt. Dies führt in vielen Fällen zu untolerierbaren Abtrübungen des Farbtons durch die zwangsläufig als Mahlkörperabrieb anfallenden Eisenoxide. Wenn mit spezifisch leichteren nichtmetallischen Mahlkörpern gemahlen wird, ist die Mahlleistung niedrig, und es wird keine ausreichende Feinverteilung erzielt.

Der Erfindung lag die Aufgabe zugrunde, ein universell einsetzbares Verfahren zur Herstellung von Pigmentpräparationen auf Basis von Pigmenten unterschiedlicher Klassen und unterschiedlichen Trägermaterialien für verschiedene Anwendungsgebiete zu entwickeln.

Es wurde gefunden, daß man die erfindungsgemäße Aufgabe überraschenderweise dadurch lösen kann, wenn man grobkristalline Rohpigmente oder schwer dispergierbare Präpigmente oder Pigmente mit dem gewünschten Trägermaterial, das Bestandteil eines flockungsstabilen, wäßrigen, wäßrig-organischen oder organischen Mediums ist, in diesem Medium auf einer Rührwerkskugelmühle mit hoher Energiedichte und kleinen, nichtmetallischen Mahlkörpern bis zum Erreichen eines bestimmten minimalen Feinverteilungsgrades der resultierenden Pigmentteilchen naßvermahlt.

Gegenstand der vorliegenden Erfindung ist ein Verfahren zur Herstellung von Pigmentpräparationen, dadurch gekennzeichnet, daß man die in grobkristallinem Zustand vorliegenden Rohpigmente oder die in schwer dispergierbarer Form vorliegenden Präpigmente oder Pigmente in einer Konzentration von 20 bis 60 Gew.-%, vorzugsweise 30 bis 50 Gew.-%, bezogen auf das Gesamtgewicht der Pigmentpräparation, ohne vorherige Trockenmahlung in einem flockungsstabilen flüssigen Medium auf einer Rührwerkskugelmühle, die mit einer Rührwerksumfangsgeschwindigkeit von über 12 m/s und einer Leistungsdichte von über 1,0 kW pro liter Mahlraum betrieben wird, unter der Einwirkung von nichtmetallischen Mahlkörpern vom Durchmesser kleiner oder gleich 1,0 mm bis zum gewünschten Feinverteilungsgrad naßvermahlt und anschließend die Pigmentpräparation isoliert, wobei das flockungsstalüle flüssige Medium ein Dispergiermittel aus der Gruppe der Fettamin-polyglykolether, Fettalkohol-polyglykolether, Fettsäure-polyglykolester, Fettsäuretauride, Fettsäure-N-methyl-tauride, Fettsäuresarkoside, Fettsäureisethionate, Alkylphenolpolyglykolether, Alkylnaphthalinsulfonate, Alkylphenylsulfonate, Alkylphenol-polyglykolethersulfate, Fettalkohol-polyglykolethersulfate und Fettamin-acetate;
ein Celluloseether, Celluloseester, Phenophast, Polycarbonat, Polyolefin, Polyamid, Polyurethan, Polyester, ein Silikon, ein Harz, Weichmacher, eine Mischung aus einem organischen Lösemittel mit einem der genannten Dispergiermittel, Harz oder Weichmacher; oder eine Lösung eines Kunststoffes ist;
oder das flockungsstabile flüssige Medium eine Mischung aus Wasser mit einem Glykol, Phthalsäurealkylester, Harnstoff, Novolak, Alkylorthophosphorsäureester, oxalkylierten Fettalkoholpolyglykolether, Bisphenolpolyglykolether, Alkylnaphthalinsulfonat, oxalkylierten Phenol- oder Alkylphenolpolyglykolether oder N-(9-Ethyl-3-carbazol)-oleylamid oder mit einer Kombination davon ist,
und wobei die Viskosität der Pigmentpräparation zwischen 0,1 und 35 Pas liegt.

Die dabei erhaltenen Pigmentpräparationen zeichnen sich aus durch hervorragende coloristische und rheologische Eigenschaften sowie gute Flockungsstabilität und gutes Absetzverhalten.

Für die erfindungsgemäße Herstellung dieser Pigmentpräparationen ist eine hohe Mahlwirkung erforderlich, die durch den Einsatz spezieller Ausführungsformen der Rührwerkskugelmühlen erreicht wird. Für eine Mahlung der gesuchten Effizienz sind z.B. Rührwerkskugelmühlen geeignet, die zum diskontinuierlichen und kontinuierlichen Arbeitsablauf ausgelegt sind, mit zylinderförmigem oder hohlzylinderförmigem Mahlraum in horizontaler oder vertikaler Bauweise und die mit einer spezifischen Leistungsdichte von über 1,0 kW, insbesondere von über 2,5 kW, pro Liter Mahlraum betrieben werden können, wobei deren Rührwerksumfangsgeschwindigkeit über 12 m/s beträgt. Durch die bauliche Ausführung wird sichergestellt, daß die hohe Mahlenergie auf das Mahlgut übertragen wird. Dafür geeignete Mühlen sind z.B. in der DE-A-3 716 587 beschrieben. Ist die Mahlintensität der Mühle zu gering, so werden die guten, erfindungsgemäßen Eigenschaften, insbesondere die hohe Farbstärke und hervorragende Coloristik der Pigmentpräparationen nicht erreicht. Die pro Zeiteinheit vom Rührwerk abgegebene Energie wird als Zerkleinerungsarbeit und als Reibungsenergie in Form von Wärme auf das Mahlgut übertragen. Zur problemlosen Abführung dieser großen Wärmemenge muß durch konstruktive Vorkehrungen das Verhältnis von Mahlraum zu Mahlraumoberfläche (Kühlfläche) möglichst klein gehalten werden. Bei hohen Durchsätzen wird im Kreislauf gemahlen und die Wärme wird überwiegend über das Mahlgut nach außen abgeführt. Als Mahlkörper dienen nichtmetallische Kugeln beispielsweise aus Zirkonoxid, Zirkonmischoxid, Aluminiumoxid oder Quarz vom Durchmesser kleiner oder gleich 1,0 mm; zweckmäßig werden solche mit einem Durchmesser von 0,2 bis 0,9 mm, vorzugsweise 0,3 bis 0,5 mm, verwendet.

Beim Einsatz von kontinuierlichen Rührwerkskugelmühlen erfolgt die Abtrennung der Mahlkörper vom Mahlgut vorzugsweise durch Zentrifugalabscheidung, so daß die Trennvorrichtungen von den Mahlkörpern praktisch nicht berührt werden, wodurch man Verstopfungen derselben weitgehend verhindern kann. Die Rührwerkskugelmühlen werden hierbei mit hohem Mahlkörperfüllgrad (> 70 Vol-%) betrieben.

Für die Naßmahlung werden zweckmäßigerweise die bei der Synthese oder bei der Reinigung grobkristallin anfallenden Rohpigmente, Mischungen dieser Rohpigmente, Pigmentzubereitungen dieser Rohpigmente, oberflächenbehandelte Rohpigmente oder grobkristalline Mischkristallrohpigmente eingesetzt. Für den physikalischen Zustand der Rohpigmente sind die Reinheit, die Kristallgröße, die Kristallgüte und eventuelle Mischkristallbildung entscheidend. Im allgemeinen müssen reine und hochkristalline Rohpigmente länger gemahlen werden als verunreinigte und im Kristallgitter gestörte Rohpigmente. Als Rohpigmente kommen z.B. Dioxazin-, Phthalocyanin-, Anthanthron-, Perylen- und Chinacridonrohpigmente in Betracht, insbesondere grobkristalline Chinacridonrohpigmente der β-Phase oder γ-Phase, grobkristalline Chinacridonmischkristallrohpigmente, grobkristalline Kupferphthalocyaninrohpigmente der α-Phase oder β-Phase, grobkristalline Dioxazinrohpigmente, grobkristalline Perylenrohpigmente und grobkristalline Anthanthronrohpigmente.

Unter grobkristallinen Rohpigmenten werden solche Rohpigmente verstanden, die für den direkten Einsatz zum Pigmentieren von organischen Materialien nicht geeignet sind. In den meisten Fällen sind dies solche mit einer mittleren Teilchengröße D₅₀ von mehr als 1 µm.

Es können auch schwer dispergierbare Präpigmente oder schwer dispergierbare Pigmente oder auch Mischungen von grobkristallinen Rohpigmenten, Präpigmenten und Pigmenten eingesetzt werden, die unter herkömmlichen Mahlbedingungen auf Rührwerkskugelmühlen mit spezifisch leichten nichtmetallischen Mahlkörpern nicht vollständig dispergiert werden können, wie z.B. den in der EP-A 0 408 499, US-PS 2 816 115 und US-PS 3 775 149 beschriebenen Rührwerkskugelmühlen. Selbstverständlich ist es auch möglich, leicht dispergierbare Pigmente, Präpigmente oder Rohpigmente nach dem erfindungsgemäßen Verfahren in Pigmentpräparationen zu überführen.

Das Dispergierverhalten eines Pigments ist sein Verhalten beim Dispergieren hinsichtlich der Änderung verschiedener Kriterien des Dispersionszustands (Teilchengröße, Farbstärke, Glanz) in Abhängigkeit von verschiedenen Einflußgrößen (Dispergiergerät, Dispergierverfahren, Dispergierzeit, Mahlgutzusammensetzung).

Zur Beurteilung des Dispergierverhaltens von schwer dispergierbaren Pigmenten wird hauptsächlich die Farbstärke herangezogen. Sie nimmt mit steigender Güte des Dispersionszustands und mit zunehmender Teilchenfeinheit zu. Deshalb kann auch der mittlere Teilchendurchmesser (D₅₀) für die Beurteilung der Dispergierbarkeit herangezogen werden. Das Prüfmedium und die Dispergierbedingungen werden je nach Anwendungsbereich des Pigments vorher festgelegt. Als Maßzahl dient der zur Erzielung einer bestimmten mittleren Teilchengröße erforderliche Dispergieraufwand (Dispergierzeit). Die mittlere Teilchengröße ist abhängig von dem jeweils eingesetzten Pigment. Nur bei gleichen Dispergierbedingungen sind die erhaltenen Kennzahlen vergleichbar. Wenn der höchstzulässige Wert unter Standarddispergierbedingungen (tₘₐₓ = 240 Min.) überschritten wird, ist dieses Pigment schwer dispergierbar und für den Einsatz zur Herstellung von Pigmentpräparationen auf einer herkömmlichen Rührwerkskugelmühle nicht geeignet.

Als schwer dispergierbare Präpigmente gelten z. B. Dioxazin-, Phthalocyanin-, Anthanthron-, Perylen- und Chinacridonpräpigmente. Als schwer dispergierbare Pigmente gelten Azo-, Dioxazin-, Phthalocyanin-, Anthanthron-, Perylen-, Chinacridon-, Pyrrolopyrrol-, Isoindolinon- und Isoindolinpigmente.

Unter einem flockungsstabilen flüssigen Medium wird eine Flüssigkeit mit der oben genannten Zusammensetzung. verstanden, die die Reagglomeration der dispergierten Pigmentteilchen in der Dispersion verhindert. Die Flockulationsbeständigkeit wird bestimmt durch den "Rub-out"-Test, bei dem der Farbstärkeunterschied oder die Farbtondifferenz der flockulierten und deflockulierten Probe durch farbmetrische Messung bestimmt wird. Ein flockungsstabiles Medium im Sinne der vorliegenden Erfindung bewirkt einen Farbstärkeunterschied von kleiner als 10 %. Die Bestimmung der Farbstärke erfolgt dabei nach DIN 55986.

In dem flockungsstabilen flüssigen Medium sind gegebenenfalls noch Konservierungsmittel enthalten.

Vorzugsweise wird die Mahlung im neutralen pH-Bereich durchgeführt. Die Pigmentkonzentration im Mahlgut ist abhängig von der Rheologie der Dispersion und vom vorgesehenen Einsatzgebiet der Pigmentpräparation und liegt in den vorstehend angegebenen Grenzen. Die Viskosität der erfindungsgemäßen Pigmentpräparationen beträgt 0,1 bis 35 Pas, vorzugsweise 0,8 bis 25 Pas, insbesondere 1 bis 10 Pas.

Die Mahldauer ist abhängig von den Feinheitsanforderungen für das jeweilige Anwendungsgebiet wie z.B. das Lack-, Druck- oder Kunststoffgebiet. Deshalb liegt die Verweilzeit des Mahlguts in der Rührwerkskugelmühle je nach geforderter Feinheit im allgemeinen zwischen 5 und 60 Minuten. Sie beläuft sich normalerweise auf eine Dauer von 5 bis 45 Minuten, vorzugsweise 10 bis 30 Minuten.

Die Mahlung wird bei Temperaturen im Bereich von 0 bis 100 °C, zweckmäßig bei einer Temperatur zwischen 10 und 70 °C, vorzugsweise bei 20 bis 60 °C durchgeführt.

Das Mahlgut kann noch weitere übliche Zusätze enthalten wie z.B. Entschäumer, Füllstoffe, Stellmittel, Konservierungsmittel, Trocknungsverzögerungsmittel und schaumreduzierende Mittel.

Unter Ausnutzung der auf diese Weise zur Verfügung stehenden Variationsmöglichkeiten, lassen sich die nach dem erfindungsgemäßen Verfahren erhaltenen Pigmentpräparationen für die verschiedensten Verwendungszwecke herstellen. Dies kann gesteuert werden über die Art des Rohpigments, des Präpigments oder Pigments, die Art des Trägermaterials und des Zusatzstoffes, sowie durch deren Konzentration und die Dauer und Temperatur der Naßmahlung. Die Pigmentpräparationen werden erhalten in Form von flüssigen Dispersionen, Teigen oder Pasten mit den vorstehend angegebenen Viskositäten. Die für das jeweilige Anwendungsgebiet optimalen Mahlbedingungen und Mahlgutzusammensetzungen müssen durch Versuche ermittelt werden.

Die Herstellung von Pigmentpräparationen nach dem erfindungsgemäßen Verfahren hat sich als besonders wirtschaftlich und umweltfreundlich erwiesen, weil bei der Naßmahlung keine Verschmutzung der Luft aufgrund von Staubentwicklung auftritt. Außerdem werden nur geringe Mengen an Chemikalien und Lösemitteln eingesetzt, welche anschließend weiterverarbeitet werden. Somit treten keine Entsorgungsprobleme auf. Beim Einsatz von grobkristallinen Rohpigmenten entfällt die herkömmliche aufwendige Feinverteilung und der Lösemittelfinish zur Überführung in die Pigmentform. Die durch den bislang nötigen Lösemittelfinish bedingten Lösemittelverluste werden vermieden, und aufwendige Apparaturen für den Lösemittelfinish und die Lösemittelregeneration werden nicht benötigt.

Wird in wäßrig-organischem Medium gemahlen, so können die feuchten grobkristallinen Rohpigmente eingesetzt werden. Dadurch entfällt die teure Trocknung der Rohpigmente. Weil für alle Einsatzgebiete der gleiche Feinverteilungsapparat eingesetzt wird, entfällt die unwirtschaftliche Vorhaltung verschiedenartiger Feinverteilungsapparate.

Es war überraschend und nicht vorhersehbar, daß durch Naßmahlung in einer Rührwerkskugelmühle mit hoher Leistungsdichte und kleinen nichtmetallischen Mahlkörpern die Feinverteilung und die Dispergierung von grobkristallinen Rohpigmenten in einer Stufe gelingt und daß dabei das gleiche coloristische Ergebnis erzielt wird wie unter herkömmlichen Mahlbedingungen beim Einsatz des aus dem gleichen grobkristallinen Rohpigment hergestellten Pigment. Außerdem war es überraschend, daß die Dispergierung von schwer dispergierbaren Pigmenten in hochviskosen Medien mit hohen Pigmentkonzentrationen gelingt, da die Wirksamkeit von Dispergiergeräten in überwiegendem Maße auf der Beweglichkeit der Mahlkörper beruht, die unter diesen Mahlbedingungen stark eingeschränkt ist, wodurch der Dispergiervorgang nach bisheriger Meinung negativ beeinflußt und die optimale Farbstärke nicht erreicht wird. Deshalb mußten bislang teure und aufwendige Zerkleinerungsapparate wie z. B. Kneter und Extruder für die oben beschriebene Feinverteilung und Dispergierung von grobkristallinen Rohpigmenten und schwer dispergierbaren Präpigmenten und schwer dispergierbaren Pigmenten eingesetzt werden.

Die nach der vorliegenden Erfindung erhältlichen Pigmentpräparationen zeichnen sich aus durch ihre hervorragenden coloristischen und rheologischen Eigenschaften, insbesondere durch hohe Flockungsstabilität, leichte Dispergierbarkeit, gutes Glanzverhalten und hohe Farbstärke.

Die erfindungsgemäß hergestellten Pigmentpräparationen lassen sich zum Pigmentieren von hochmolekularen organischen Materialien natürlicher oder synthetischer Herkunft, Druckfarben oder Tinten einsetzen.

Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon und Silikonharze, einzeln oder in Mischungen.

Dabei spielt es keine Rolle, ob die erwähnten hochmolekularen organischen Verbindungen als plastische Massen, Gießharze, Schmelzen, Pasten oder in Form von Spinnlösungen, Lacken, Lasuren, Schäumen, Tuschen, Tinten, Beizen, Anstrichstoffen oder Druckfarben vorliegen.

Zur Beurteilung der Eigenschaften der nach der Erfindung erzeugten Pigmentpräparationen auf dem Lacksektor wurde aus der Vielzahl der bekannten Lacke ein langöliger, lösemittelhaltiger, aromatenfreier Alkydharzlack (AKH-Lack) ausgewählt.

Zur Beurteilung der Eigenschaften der nach der Erfindung erzeugten Pigmentpräparationen auf dem Gebiet der wäßrigen Dispersionsfarben, wurde eine Dispersionsfarbe auf Polyvinylacetatbasis (PVA-Dispersionsfarbe) ausgewählt.

Zur Beurteilung der Eigenschaften der nach der Erfindung erzeugten Pigmentpräparationen auf dem Textildruckgebiet wurde eine lösemittelfreie Textildruckfarbe auf Acrylatbasis (ACL-Textildruck) ausgewählt.

Zur Beurteilung der Eigenschaften der nach der Erfindung erzeugten Pigmentpräparationen auf dem Kunststoffsektor wurde aus der Vielzahl der bekannten Kunststoffe Weichpolyvinylchlorid (PVC) ausgewählt.

Zur Beurteilung der Eigenschaften der nach der Erfindung erzeugten Pigmentpräparationen auf dem Drucksektor wurde aus der Vielzahl der bekannten Drucksysteme ein wäßrig-alkoholisches Flexodrucksystem auf Basis eines Acrylharzes (AWF-Flexodruck) ausgewählt.

Die Bestimmung der Farbstärke und des Farbtons erfolgte nach DIN 55986.

Die Bestimmung der Kristallphase der Rohpigmente, Präpigmente, Pigmente, Mischkristallpigmente und Pigmentzubereitungen erfolgte durch Röntgenspektroskople.

Die Bestimmung der mittleren Teilchendurchmesser D₅₀ der grobkristallinen Rohpigmente erfolgte durch Laserlichtbeugung.

Die Bestimmung der mittleren Teilchendurchmesser D₅₀ der Pigmente in den Pigmentpräparationen erfolgte durch graphische Auswertung von elektronenmikroskopischen Aufnahmen.

Die Bestimmung der Viskosität der Pigmentpräparationen erfolgte mit einem Rotationsviskosimeter der Fa. Haake.

Im vorangehenden Text und in den nachstehenden Beispielen beziehen sich Teile jeweils auf Gewichtsteile und Prozente jeweils auf Gewichtsprozente der so beschriebenen Substanzen.

### Beispiel 1

In eine Rührwerkskugelmühle Typ PML (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 20 Teilen Wasser, 17,1 Teilen Propylenglykol, 3,6 Teilen Harnstoff, 6,75 Teilen oberflächenaktivem Mittel eines oxethylierten Siebenkernnovolaks auf Basis von Nonylphenol, 0,18 Teilen Konservierungsmittel und 42,3 Teilen grobkristallinem Rohpigment (C.I. Pigment Blue 15:3, C.I. No. 74 160, D₅₀ = 1,6 *µ*m) eindosiert und mit einer Rührwerksumfangsgeschwindigkeit von 15,6 m/s sowie einer spezifischen Leistungsdichte von 3,1 kW pro Liter Mahlraum 7,5 Minuten lang bei 20-25 °C gemahlen. Anschließend wird die Mahlgutdispersion von den Mahlkörpern abgesiebt.

Man erhält eine Pigmentpräparation, die im ACL-Textildruck auf Baumwolle farbstarke und sehr reine Drucke liefert. Die Viskosität der Pigmentpräparation beträgt 1,2 Pas.

### Beispiel 1a (Vergleichsbeispiel)

Wird die Mahlung in Beispiel 4 wiederholt mit der einzigen Abänderung, daß man an Stelle der Zirkonmischoxidmahlkörper 685 Teile Stahlmahlkörper vom Durchmesser 0,2-0,4 mm einsetzt, so erhält man eine Pigmentpräparation, die im ACL-Textildruck auf Baumwolle deutlich trübere Drucke liefert als die nach Beispiel 4 hergestellte Pigmentpräparation.

### Beispiel 2

In eine Rührwerkskugelmühle Typ PML (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 34,9 Teilen Wasser, 17,1 Teilen Ethylenglykol, 0,18 Teilen Konservierungsmittel, 10,8 Teilen oberflächenaktivem Mittel eines oxethylierten Siebenkernnovolaks auf Basis von Nonylphenol, 22,5 Teilen Pigment (C.I. Pigment Blue 15:1, C.I. No. 74 160) und 4,5 Teilen grobkristallinem Rohpigment (Pigment Violet 23, D₅₀ = 8 *µ*m) eindosiert und mit einer Rührwerksumfangsgeschwindigkeit von 15,6 m/s sowie einer spezifischen Leistungsdichte von 3,1 kW pro Liter Mahlraum 30 Minuten lang bei 20-25 °C gemahlen. Anschließend wird die Mahlgutdispersion von den Mahlkörpern abgesiebt.

Man erhält eine Pigmentpräparation, die im ACL-Textildruck auf Baumwolle farbstarke Drucke liefert. Die Viskosität der Pigmentpräparation beträgt 1,0 Pas.

### Beispiel 3

In eine Rührwerkskugelmühle Typ PML (Hersteller: Draiswerke GmbH, Mannheim), die mit 500 Teilen Zirkonoxidperlen vom Durchmesser 0,3-0,5 mm als Mahlkörper gefüllt ist, wird eine Suspension bestehend aus 15 Teilen Wasser, 46 Teilen Ethylenglykol, 16,5 Teilen oberflächenaktivem Mittel eines oxethylierten Fettalkoholpolyglykolethers auf Basis von Oleylalkohol, 0,2 Teilen Konservierungsmittel, 2,3 Teilen N-(9-Ethyl-3-carbazol)-oleylamid und 20 Teilen grobkristallinem Rohpigment (Pigment Violet 23, D₅₀ = 8 *µ*m) eindosiert und mit einer Rührwerksumfangsgeschwindigkeit von 15,6 m/s sowie einer spezifischen Leistungsdichte von 3,1 kW pro Liter Mahlraum 30 Minuten lang bei 20-25 °C gemahlen. Anschließend wird die Mahlgutdispersion von den Mahlkörpern abgesiebt.

Man erhält eine Pigmentpräparation, die im lösemittelhaltigen AKH-Lack und in der wäßrigen PVA-Dispersionsfarbe farbstarke Ausfärbungen liefert.

### Beispiel 4

In eine Rührwerkskugelmühle Typ PML (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 59,3 Teilen Wasser, 5,7 Teilen Propylenglykol, 5,7 Teilen Diethylenglykol, 0,2 Teilen Konservierungsmittel, 4,5 Teilen oberflächenaktivem Mittel eines oxethylierten Fettalkoholpolyglykolethers auf Basis von Oleylalkohol, 4,5 Teilen oberflächenaktivem Mittel auf Basis eines Alkylphenolnovolaks und einem Fettalkoholpolyglykolether, 0,5 Teilen Pigmentdispergator auf Basis des Kondensationsproduktes aus Naphthoylenbenzimidazoldicarbonsäure und n-Propylpiperazin und 19,5 Teilen grobkristallinem Rohpigment (C.I. Pigment Red 168, C.I. No. 59 300, D₅₀ = 11 *µ*m) eindosiert und mit einer Rührwerksumfangsgeschwindigkeit von 15,6 m/s sowie einer spezifischen Leistungsdichte von 3,1 kW pro Liter Mahlraum 20 Minuten lang bei 20-25 °C gemahlen. Anschließend wird die Mahlgutdispersion von den Mahlkörpern abgesiebt.

Man erhält eine Pigmentpräparation, die im lösemittelhaltigen AKH-Lack und in der wäßrigen PVA-Dispersionsfarbe farbstarke Ausfärbungen liefert.

### Beispiel 5

In eine Rührwerkskugelmühle Typ PML (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 19,8 Teilen Wasser, 42 Teilen Ethylenglykol, 0,2 Teilen Konservierungsmittel, 2,0 Teilen N-(9-Ethyl-3-carbazol)-oleylamid, 16 Teilen oberflächenaktivem Mittel eines oxethylierten Fettalkoholpolyglykolethers auf Basis von Oleylalkohol und 20 Teilen Präpigment (Pigment Violet 23, hergestellt gemäß US-PS 4 253 839) eindosiert und mit einer Rührwerksumfangsgeschwindigkeit von 15,6 m/s sowie einer spezifischen Leistungsdichte von 3,1 kW pro Liter Mahlraum 30 Minuten lang bei 20-25 °C gemahlen. Anschließend wird die Mahlgutdispersion von den Mahlkörpern abgesiebt.

Man erhält eine Pigmentpräparation, die im lösemittelhaltigen AKH-Lack und in der wäßrigen PVA-Dispersionsfarbe farbstarke Ausfärbungen liefert. Die Viskosität der Pigmentpräparation beträgt 3,5 Pas.

### Beispiel 6

In eine Rührwerkskugelmühle Typ PML (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 35,8 Teilen Wasser, 20 Teilen Propylenglykol, 0,2 Teilen Konservierungsmittel, 2,0 Teilen N-(9-Ethyl-3-carbazol)-oleylamid, 12 Teilen Bisphenolpolyglykolether und 30 Teilen Präpigment (Pigment Violet 23, hergestellt gemäß US-PS 5 318 627) eindosiert und mit einer Rührwerksumfangsgeschwindigkeit von 15,6 m/s sowie einer spezifischen Leistungsdichte von 3,1 kW pro Liter Mahlraum 13 Minuten lang bei 20-25 °C gemahlen. Anschließend wird die Mahlgutdispersion von den Mahlkörpern abgesiebt.

Man erhält eine Pigmentpräparation, die in der wäßrigen PVA-Dispersionsfarbe farbstarke Ausfärbungen liefert. Die Viskosität der Pigmentpräparation beträgt 25 Pas.

### Beispiel 7

In eine Rührwerkskugelmühle Typ PML (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 12,8 Teilen Wasser, 0,2 Teilen Konservierungsmittel, 20 Teilen des Sulfobernsteinsäurehalbesters eines oxethylierten Dreikernphenolnovolaks, 2,0 Teilen eines Alkylnaphthalinsulfonats und 50 Teilen Präpigment (Pigment Blue 15, mit 30 % β-Anteil, hergestellt aus grobkristallinem Rohpigment (Pigment Blue 15:3) analog US-PS 4 253 839) eindosiert und mit einer Rührwerksumfangsgeschwindigkeit von 15,6 m/s sowie einer spezifischen Leistungsdichte von 3,1 kW pro Liter Mahlraum 13 Minuten lang bei 20-25 °C gemahlen. Anschließend wird die Mahlgutdispersion von den Mahlkörpern abgesiebt.

Man erhält eine Pigmentpräparation, die in der wäßrigen PVA-Dispersionsfarbe farbstarke Ausfärbungen liefert.

### Beispiel 8

In eine Rührwerkskugelmühle Typ PML (Hersteller: Draiswerke GmbH, Mannheim), die mit 500 Teilen Zirkonoxidperlen vom Durchmesser 0,3-0,5 mm als Mahlkörper gefüllt ist, wird eine Suspension bestehend aus 82 Teilen Diisodecylphthalat und 26 Teilen grobkristallinem Mischkristallrohpigment (bestehend aus 80 % C.I. Pigment Red 122, C.I. No. 73 915 und 20 % C.I. Pigment Violet 19, C.I. No. 73 900, D₅₀ = 2,5 *µ*m) eindosiert und mit einer Rührwerksumfangsgeschwindigkeit von 15,6 m/s sowie einer spezifischen Leistungsdichte von 3,1 kW pro Liter Mahlraum 30 Minuten lang bei 20-25 °C gemahlen. Anschließend wird die Mahlgutdispersion von den Mahlkörpern abgesiebt.

Man erhält eine Pigmentpräparation, die in PVC farbstarke Ausfärbungen liefert. Die Viskosität der Pigmentpräparation beträgt 23,9 Pas.

### Beispiel 9

In eine Rührwerkskugelmühle Typ PML (Hersteller: Draiswerke GmbH, Mannheim), die mit 500 Teilen Zirkonoxidperlen vom Durchmesser 0,3-0,5 mm als Mahlkörper gefüllt ist, wird eine Suspension bestehend aus 85 Teilen Diisodecylphthalat und 26 Teilen grobkristallinem Rohpigment (C.I. Pigment Brown 26, C.I. No 71129, D₅₀ = 9 *µ*m) eindosiert und mit einer Rührwerksumfangsgeschwindigkeit von 15,6 m/s sowie einer spezifischen Leistungsdichte von 3,1 kW pro Liter Mahlraum 30 Minuten lang bei 20-25 °C gemahlen. Anschließend wird die Mahlgutdispersion von den Mahlkörpern abgesiebt.

Man erhält eine Pigmentpräparation, die in PVC farbstarke Ausfärbungen liefert. Die Viskosität der Pigmentpräparation beträgt 5,5 Pas.

### Beispiel 10

In eine Rührwerkskugelmühle Typ PML (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 41,8 Teilen Wasser, 10 Teilen Propylenglykol, 0,2 Teilen Konservierungsmittel, 8 Teilen oberflächenaktivem Mittel auf Basis einer Mischung aus oxethyliertem Phenol- und Alkylphenolpolyglykolether, 40 Teilen schwer dispergierbarem Pigment (C.I. Pigment Yellow 13, C.I. No. 21 100), eindosiert und mit einer . Rührwerksumfangsgeschwindigkeit von 15,6 m/s sowie einer spezifischen Leistungsdichte von 3,1 kW pro Liter Mahlraum 13 Minuten lang bei 20 °C gemahlen. Anschließend wird die Mahlgutdispersion von den. Mahlkörpern abgesiebt.

Man erhält eine Pigmentpräparation, deren mittlerer Teilchendurchmesser 0,065 *µ*m beträgt. In der wäßrigen PVA-Dispersionsfarbe werden farbstarke Ausfärbungen erhalten. Sie kann auf Grund ihrer geringen Teilchengröße und hohen Farbstärke eingesetzt werden zum Pigmentieren von Zeichentuschen, Faserschreiber-, Fineliner- und Rollerballtinten.
Die Prüfung der Dispergierbarkeit der Pigmente in dem obigen System wird wie folgt durchgeführt:

### Vergleichsbeispiel 10a

In eine Rührwerkskugelmühle Typ PM1 (Hersteller: Draiswerke GmbH, Mannheim), die mit 1100 Teilen Quarzperlen vom Durchmesser 0,3 mm als Mahlkörper gefüllt ist, wird eine Suspension bestehend aus 100 Teilen Wasser, 45 Teilen Propylenglykol, 0,9 Teilen Konservierungsmittel, 36 Teilen oberflächenaktivem Mittel auf Basis einer Mischung aus oxethyliertem Phenolund Alkylphenolpolyglykolether, 180 Teilen Pigment (C.I. Pigment Yellow 13) eindosiert und mit einer Rührwerksumfangsgeschwindigkeit von 10,2 m/s (2790 U/Min.) sowie einer spezifischen Leistungsdichte von 0,69 kW pro Liter Mahlraum 240 Minuten lang bei 20 °C gemahlen. Nach 30 und nach 90 Minuten Mahlzeit werden jeweils 44 Teile Wasser zugesetzt. Anschließend wird die Mahlgutdispersion von den Mahlkörpern abgesiebt.

Der Grenzwert der mittleren Teilchengröße D₅₀ ist abhängig von dem jeweils eingesetzten Pigment und beträgt für Pigment Yellow 13 0,089 *µ*m. Liegt die mittlere Teilchengröße D₅₀ nach 240 Minuten Dispergierzeit über diesem Wert, so kann das Pigment auf einer herkömmlichen Rührwerkskugelmühle nicht für die Herstellung der obigen Pigmentpräparation eingesetzt werden.

### Beispiel 11

In eine Rührwerkskugelmühle Typ DCP-3 (Hersteller: Draiswerke GmbH, Mannheim), die mit 37 Teilen Zirkonoxidperlen vom Durchmesser 0,4-0,6 mm als Mahlkörper gefüllt ist, wird eine Suspension bestehend aus 41,8 Teilen Wasser, 10 Teilen Propylenglykol, 0,2 Teilen Konservierungsmittel, 8 Teilen oberflächenaktives Mittel auf Basis einer Mischung aus oxethyliertem Phenol- und Alkylphenolpolyglykolether, 40 Teilen Pigment (C.I. Pigment Yellow 13) eindosiert und 2 Passagen mit einer Drehzahl von 850 U/Min und mit einer Leistung von 36 kW mit einem Durchsatz von 60 Teilen pro Stunde bei 55-60 °C gemahlen.

Man erhält eine Pigmentpräparation, deren mittlerer Teilchendurchmesser 0,071 *µ*m beträgt. In der wäßrigen PVA-Dispersionsfarbe werden farbstarke Ausfärbungen erhalten. Sie kann auf Grund ihrer geringen Teilchengröße und hohen Farbstärke eingesetzt werden zum Pigmentieren von Zeichentuschen, Faserschreiber-, Fineliner- und Rollerballtinten.

### Beispiel 12

In eine Rührwerkskugelmühle Typ PML (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 38,3 Teilen Wasser, 10 Teilen Propylenglykol, 0,2 Teilen Konservierungsmittel, 6,5 Teilen oberflächenaktivem Mittel auf Basis von oxethyliertem Kondensationsprodukt aus Bisphenol und Talgfettalkohol und 45 Teilen schwer dispergierbarem Pigment (C.I. Pigment Red 122) eindosiert und mit einer Rührwerksumfangsgeschwindigkeit von 15,6 m/s sowie einer spezifischen Leistungsdichte von 3,1 kW pro Liter Mahlraum 25 Minuten lang bei 20-25 °C gemahlen. Anschließend wird die Mahlgutdispersion von den Mahlkörpern abgesiebt.

Man erhält eine Pigmentpräparation, die in der wäßrigen PVA-Dispersionsfarbe farbstarke Ausfärbungen liefert.

### Beispiel 13

In eine Rührwerkskugelmühle Typ PML (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 31,0 Teilen Wasser, 8 Teilen Propylenglykol, 0,16 Teilen Konservierungsmittel, 4 Teilen oberflächenaktivem Mittel auf Basis einer Mischung aus oxethyliertem Phenol- und Alkylphenolpolyglykolether, 0,8 Teilen oberflächenaktivem Mittel des Kondensationsproduktes aus Dimethylnaphthalinsulfonsäure-Na-salz und Formaldehyd und 36 Teilen schwer dispergierbarem Pigment (C.I. Pigment Red 184, C.I. No. 12 487) eindosiert und mit einer Rührwerksumfangsgeschwindigkeit von 15,6 m/s sowie einer spezifischen Leistungsdichte von 3,1 kW pro Liter Mahlraum 22 Minuten lang bei 20-25 °C gemahlen. Anschließend wird die Mahlgutdispersion von den Mahlkörpern abgesiebt.

Man erhält eine Pigmentpräparation, die im AWF-Flexodruck farbstarke Drucke und in der wäßrigen PVA-Dispersionsfarbe farbstarke Ausfärbungen liefert. Die Viskosität der Pigmentpräparation beträgt 0,8 Pas.

### Beispiel 14

In eine Rührwerkskugelmühle Typ PML (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 42,3 Teilen Wasser, 5,0 Teilen Harnstoff, 0,5 Teilen Alkylorthophosphorsäureester, 15 Teilen oberflächenaktivem Mittel eines oxethylierten Siebenkernnovolaks auf Basis von Nonylphenol, 0,2 Teilen Konservierungsmittel und 36,7 Teilen grobkristallinem Rohpigment (C.I. Pigment Blue 15, D₅₀ = 64 *µ*m) eindosiert und mit einer Rührwerksumfangsgeschwindigkeit von 15,6 m/s sowie einer spezifischen Leistungsdichte von 3,1 kW pro Liter Mahlraum 30 Minuten lang bei 20-30 °C gemahlen. Anschließend wird die Mahlgutdispersion von den Mahlkörpern abgesiebt.

Man erhält eine Pigmentpräparation, die im ACL-Textildruck auf Baumwolle farbstarke Drucke liefert.

### Beispiel 15

In eine Rührwerkskugelmühle Typ LMZ 10 (Hersteller: Netzschwerke GmbH, Selb, Bayern), die mit 20,7 Teilen Zirkonmischoxidperlen vom Durchmesser 0,4-0,6 mm als Mahlkörper gefüllt ist, wird eine Suspension, bestehend aus 7,4 Teilen Wasser, 10 Teilen Ethylenglykol, 0,1 Teilen Konservierungsmittel, 8 Teilen des Sulfobernsteinsäurehalbesters eines oxethylierten Dreikernphenolnovolaks, 2 Teilen des Kondensationsproduktes aus Dimethylnaphthalinsulfonsäure-Na-salz und Formaldehyd und 22,5 Teilen schwer dispergierbarem Pigment (C.I. Pigment Blue 15:3) eindosiert und mit einer Rührwerksumfangsgeschwindigkeit von 12,7 m/s sowie einer spezifischen Leistungsdichte von 1,2 kW pro Liter Mahlraum 60 Minuten lang bei 40-50°C im Kreislauf mit einem Durchsatz von 600 l/h gemahlen.
Man erhält eine Pigmentpräparation, die im AWF-Flexodruck farbstarke Drucke liefert.

## Patentansprüche

1. Verfahren zur Herstellung von Pigmentpräparationen, **dadurch gekennzeichnet, daß** man die in grobkristallinem Zustand vorliegenden Rohpigmente oder die in schwer dispergierbarer Form vorliegenden Präpigmente oder Pigmente in einer Konzentration von 20 bis 60 Gew.-%, bezogen auf das Gesamtgewicht der Pigmentpräparation, ohne vorherige Trockenmahlung in einem flockungsstabilen flüssigen Medium auf einer Rührwerkskugelmühle, die mit einer Rührwerksumfangsgeschwindigkeit von über 12 m/s und einer Leistungsdichte von über 1,0 kW pro liter Mahlraum betrieben wird, unter der Einwirkung von nichtmetallischen Mahlkörpern vom Durchmesser kleiner oder gleich 1,0 mm bis zum gewünschten Feinverteilungsgrad naßvermahlt und anschließend die Pigmentpräparation isoliert, wobei das flockungsstabile flüssige Medium ein Dispergiermittel aus der Gruppe der Fettamin-polyglykolether, Fettalkohol-polyglykolether, Fettsäure-polyglykolester, Fettsäuretauride, Fettsäure-N-methyl-tauride, Fettsäuresarkoside, Fettsäureisethionate, Alkylphenolpolyglykolether, Alkylnaphthalinsulfonate, Alkylphenylsulfonate, Alkylphenol-polyglykolethersulfate, Fettalkohol-polyglykolethersulfate und Fettamin-acetate;
ein Celluloseether, Celluloseester, Phenophast, Polycarbonat, Polyolefin, Polyamid, Polyurethan, Polyester, ein Silikon, ein Harz, Weichmacher, eine Mischung aus einem organischen Lösemittel mit einem der genannten Dispergiermittel, Harz oder Weichmacher; oder eine Lösung eines Kunststoffes ist;
oder das flockungsstabile flüssige Medium eine Mischung aus Wasser mit einem Glykol, Phthalsäurealkylester, Harnstoff, Novolak, Alkylorthophosphorsäureester, oxalkylierten Fettalkoholpolyglykolether, Bisphenolpolyglykolether, Alkylnaphthalinsulfonat, oxalkylierten Phenol- oder Alkylphenolpolyglykolether oder N-(9-Ethyl-3-carbazol)-oleylamid oder mit einer Kombination davon ist,
und wobei die Viskosität der Pigmentpräparation zwischen 0,1 und 35 Pas liegt.

2. Verfahren gemäß Anspruch 1, **dadurch gekennzeichnet, daß** man Mahlkörper aus Zirkonoxid, Zirkonmischoxid, Aluminiumoxid oder Quarz einsetzt.

3. Verfahren gemäß Anspruch 1 oder 2, **dadurch gekennzeichnet, daß** man Mahlkörper vom Durchmesser 0,2 bis 0,9 mm, vorzugsweise 0,3 bis 0,5 mm, einsetzt.

4. Verfahren gemäß mindestens einem der Ansprüche 1 bis 3, **dadurch gekennzeichnet, daß** die Rohpigment-, Präpigment- oder Pigmentkonzentration im Mahlgut 30 bis 50 Gew.-%, bezogen auf das Gesamtgewicht der Pigmentpräparation, beträgt.

5. Verfahren gemäß einem oder mehreren der Ansprüche 1 bis 4, **dadurch gekennzeichnet, daß** man grobkristalline Chinacridonrohpigmente der β-Phase oder δ-Phase, grobkristalline Chinacridonmischkristallrohpigmente, grobkristalline Kupferphthalocyaninrohpigmente der α-Phase oder β-Phase, grobkristalline Dioxazinrohpigmente, grobkristalline Perylenrohpigmente, grobkristalline Anthanthronrohpigmente;
Dioxazinpräpigmente, Kupferphthalocyaninpräpigmente, Chinacridonpräpigmente;
Azopigmente, Dioxazinpigmente, Kupferphthalocyaninpigmente, Chinacridonpigmente, Pyrrolopyrrolpigmente, Isoindolinonpigmente oder Isoindolinpigmente einsetzt.

6. Verfahren gemäß einem oder mehreren der Ansprüche 1 bis 5, **dadurch gekennzeichnet, daß** man Mischungen von Rohpigmenten, Präpigmenten oder Pigmenten einsetzt.

7. Verfahren gemäß einem oder mehreren der Ansprüche 1 bis 6, **dadurch gekennzeichnet, daß** die Mahldauer in der Rührwerkskugelmühle 5 bis 60 Minuten, vorzugsweise 10 bis 30 Minuten, beträgt.

8. Verfahren nach mindestens einem der Ansprüche 1 bis 7, **dadurch gekennzeichnet, daß** die Rührwerkskugelmühlemit einer Leistungsdichte von über 2,5 kW pro Liter Mahlraum betrieben wird.

9. Verfahren nach mindestens einem der Ansprüche 1 bis 8, **dadurch gekennzeichnet, daß** die Viskositäst der Pigmentpräparation zwischen 0.8 und 25 Pas liegt.

## Claims

1. A process for the preparation of pigment preparations, which comprises wet milling the crude pigments which are present in coarsely crystalline state, or prepigments or pigments which are present in a form in which they are difficult to disperse, in a concentration of from 20 to 60% by weight based on the total weight of the pigment preparation without previous dry milling, in a flocculation-stable liquid medium and in a stirred ball mill which is operated with a peripheral stirrer speed of more than 12 m/s and a power density of more than 1.0 kW per liter of milling space, under the action of nonmetallic grinding media with a diameter of less than or equal to 1.0 mm, until the desired degree of fine division is reached, and then isolating the pigment preparation, the flocculation-stable liquid medium being a dispersant from the group of fatty amine polyglycol ethers, fatty alcohol polyglycol ethers, fatty acid polyglycol esters, fatty acid taurides, fatty acid N-methyl-taurides, fatty acid sarcosides, fatty acid isethionates, alkylphenol polyglycol ethers, alkylnaphthalenesulfonates, alkylphenolsulfonates, alkylphenol polyglycol ether sulfates, fatty alcohol polyglycol ether sulfates and fatty amine acetates; a cellulose ether, cellulose ester, phenolic resin, polycarbonate, polyolefin, polyamide, polyurethane, polyester, a silicone, a resin, plasticizer, a mixture of an organic solvent with one of the stated dispersants, resin or plasticizer; or a solution of a polymer; or the flocculation-stable liquid medium is a mixture of water with a glycol, alkyl phthalate, urea, novolak, alkyl orthophosphoric ester, alkoxylated fatty alcohol polyglycol ether, bisphenol polyglycol ether, alkylnaphthalene-sulfonate, alkoxylated phenol polyglycol ether or alkylphenol polyglycol ether or N-(9-ethyl-3-carbazole)oleylamide or with a combination thereof, and the viscosity of the pigment preparation being between 0.1 and 35 Pa s.

2. The process as claimed in claim 1, wherein grinding media of zirconium oxide, zirconium mixed oxide, aluminum oxide or quartz are employed.

3. The process as claimed in claim 1 or 2, wherein grinding media with a diameter of from 0.2 to 0.9 mm, preferably from 0.3 to 0.5 mm, are employed.

4. The process as claimed in at least one of claims 1 to 3, wherein the concentration of crude pigment, prepigment or pigment in the millbase is from 30 to 50% by weight, based on the total weight of the pigment preparation.

5. The process as claimed in one or more of claims 1 to 4, wherein use is made of coarsely crystalline quinacridone crude pigments of the β-phase or δ-phase, coarsely crystalline quinacridone mixed-crystal crude pigments, coarsely crystalline copper phthalocyanine crude pigments of the α-phase or β-phase, coarsely crystalline dioxazine crude pigments, coarsely crystalline perylene crude pigments, coarsely crystalline anthanthrone crude pigments; dioxazine prepigments, copper phthalocyanine prepigments, quinacridone prepigments; azo pigments, dioxazine pigments, copper phthalocyanine pigments, quinacridone pigments, pyrrolopyrrole pigments, isoindolinone pigments or isoindoline pigments.

6. The process as claimed in one or more of claims 1 to 5, wherein mixtures of crude pigments, prepigments or pigments are employed.

7. The process as claimed in one or more of claims 1 to 6, wherein the duration of milling in the stirred ball mill is from 5 to 60 minutes, preferably from 10 to 30 minutes.

8. The process as claimed in at least one of claims 1 to 7, wherein the stirred ball mill is operated with a power density of more than 2.5 kW per liter of milling space.

9. The process as claimed in at least one of claims 1 to 8, wherein the viscosity of the pigment preparation is between 0.8 and 25 Pa s.

## Revendications

1. Procédé pour la préparation de préparations pigmentaires, **caractérisé en ce qu'**on broie par voie humide les pigments bruts qui se présentent en état de cristaux grossiers ou des prépigments ou pigments qui se présentent sous forme difficile à disperser en une concentration de 20 à 60 % en masse, par rapport au poids total de la préparation pigmentaire, sans broyage à sec préalable, dans un milieu liquide stable à la floculation, dans un broyeur à microbilles que l'on conduit avec une vitesse périphérique de broyeur supérieure à 12 m/s et une puissance volumique supérieure à 1,0 kW par litre de chambre de broyage, sous l'action de corps broyants non métalliques ayant un diamètre inférieur à 1,0 mm, jusqu'à l'obtention du degré de finesse voulu et ensuite on isole la préparation pigmentaire, le milieu liquide stable à la floculation étant un milieu dispersant pris dans le groupe comportant le milieu liquide stable à la floculation étant un agent dispersant étant pris dans le groupe comportant des éthers d'amines grasses et de polyglycol, des éthers d'alcools gras et de polyglycol, des esters d'acides gras et de polyglycol, des taurides d'acides gras, des N-méthyl-taurides d'acides gras, des sarcosides d'acides gras, des isothionates d'acides gras, des éthers d'alkylphénols et de polyglycols, des alkylnaphtalènesulfonates, des alkylphénylsulfonates, des éthersulfates d'alkylphénol et de polyglycol, des éthersulfates d'alcools gras et de polyglycol et des acétates d'amines grasses, un éther cellulosiques, un ester cellulosique, un phénoplaste, un polycarbonate, une polyoléfine, un polyamide, un polyuréthanne, un polyester, un silicone, une résine, des plastifiants, un mélange d'un solvant organique avec un des agents dispersants précités, une résine ou un plastifiant, ou une solution d'une matière plastique, ou le milieu liquide stable à la floculation est un mélange d'eau avec un glycol, un ester alkylique de l'acide phtalique, l'urée, une novolaque, un ester alkylique de l'acide orthophosphorique, un éther d'alcools gras et de polyglycol oxalkylé, un éther de bisphénol et de polyglycol, un alkylnaphtalènesulfonate, un éther de phénol ou d'alkylphénol et de polyglycol oxalkylé ou le N-(9-éthyl-3-carbazol)oléylamide ou une combinaison de ces composés, et la viscosité de la préparation pigmentaire étant comprise entre 0,1 et 35 Pas.

2. Procédé selon la revendication 1, **caractérisé en ce qu'**on utilise des corps broyants d'oxyde de zirconium, d'oxyde mixte de zirconium, d'oxyde d'aluminium ou de quartz.

3. Procédé selon la revendication 1 ou 2, **caractérisé en ce qu'**on utilise des corps broyants de 0,2 à 0,9 mm de diamètre, de préférence de 0,3 à 0,5 mm.

4. Procédé selon au moins l'une des revendications 1 à 3, **caractérisé en ce que** la teneur en pigment brut, en prépigment ou en pigment dans la matière à broyer est de 30 à 50 %, par rapport au poids total de la préparation pigmentaire.

5. Procédé selon une ou plusieurs des revendiactions 1 à 4, **caractérisé en ce qu'**on utilise des pigments bruts de quinacridone à cristaux grossiers de la phase β ou de la phase δ, des pigments bruts de quinacridone à cristaux mixtes à cristaux grossiers, des pigments bruts de phtalocyanine de cuivre à cristaux grossiers de la phase α ou de la phase β, des pigments bruts de dioxazine à cristaux grossiers, des pigments bruts de pérylène à cristaux grossiers, des pigments bruts d'anthanthrone à cristaux grossiers ; des prépigments de dioxazine, des prépigments de phtalocyanine de cuivre, des prépigments de quinacridone ; des pigments azoïques, des pigments de dioxazine, des pigments de phtalocyanine de cuivre, des pigments de quinacridone, des pigments de pyrrolopyrrole, des pigments d'isoindolinone ou des pigments d'isoindoline.

6. Procédé selon une ou plusieurs des revendications 1 à 5, **caractérisé en ce qu'**on utilise des mélanges de pigments bruts, de prépigments ou de pigments.

7. Procédé selon une ou plusieurs des revednications 1 à 6, **caractérisé en ce que** la durée de broyage dans le broyeur à microbilles est de 5 à 60 minutes, de préférence de 10 à 30 minutes.

8. Procédé selon au moins une des revednications 1 à 7, **caractérisé en ce qu'**on conduit le broyeur à microbilles avec une puissance volumique supérieure à 2,5 kW par litre de chambre de broyage.

9. Procédé selon au moins l'une des revendications 1 à 8, **caractérisé en ce que** la viscosité de la préparation pigmentaire est comprise entre 0,8 et 25 Pas.
